# EUROPÄISCHE PATENTSCHRIFT

(11) **EP 2 907 150 B1**
(45) Veröffentlichungstag und Bekanntmachung des Hinweises auf die Patenterteilung: **28.06.2017**
(21) Anmeldenummer: 12798643.8
(22) Anmeldetag: 19.11.2012
(51) Int. Cl.: H02P 1/02, H02P 3/02, H02M 1/00, H01H 9/54

(54) **SCHALTGERÄT ZUM STEUERN DER ENERGIEZUFUHR EINES NACHGESCHALTETEN ELEKTROMOTORS**
SWITCHING APPARATUS FOR CONTROLLING THE POWER SUPPLY TO A DOWNSTREAM CONNECTED ELECTRICAL MOTOR
DISPOSITIF DE COMMUTATION POUR COMMANDER L'ALIMENTATION D'ÉNERGIE À UN MOTEUR ÉLECTRIQUE MONTÉ EN AVAL

(43) Veröffentlichungstag der Anmeldung: 19.08.2015
(73) Patentinhaber: Siemens Aktiengesellschaft, 80333 München (DE)
(72) Erfinder: KUHLA, Hubert, 91217 Hersbruck (DE); FRITSCH, Andreas, 92245 Kümmersbruck (DE)
(86) Internationale Anmeldenummer: PCT/EP2012/072987
(87) Internationale Veröffentlichungsnummer: WO 2014/075742

(56) Entgegenhaltungen:
- WO-A2-2011/143087
- JP-A- 2010 063 272
- US-A- 5 953 189

## Beschreibung

Die Erfindung betrifft ein Schaltgerät zum Steuern der Energiezufuhr eines nachgeschalteten Elektromotors sowie ein Verfahren des Schaltgeräts. Das erfindungsgemäße Schaltgerät ist insbesondere ein Motorstarter, welcher innerhalb der industriellen Automatisierungstechnik eingesetzt wird. Mittels des Schaltgeräts kann ein dem Schaltgerät nachgeschalteter Elektromotor gesteuert werden. Hierfür wird eine Energieversorgung des dem Schaltgerät nachgeschalteten Elektromotors über das Schaltgerät geführt, so dass der Elektromotor mit einem Versorgungsnetz verbunden ist. Das Versorgungsnetz ist insbesondere ein Niederspannungsnetz einer industriellen Anlage (z.B. drei Phasen, 400 Volt, 50 Hertz).

Zum Steuern der Energieversorgung des nachgeschalteten Elektromotors umfasst das Schaltgerät eine Steuereinheit und eine erste Strombahn. Über die erste Strombahn wird eine erste Phase des Versorgungsnetzes zum nachgeschalteten Elektromotor geführt. Die erste Strombahn umfasst einen ersten elektromechanischen Schalter und eine in Reihe zum ersten Schalter geschaltete Parallelschaltung eines zweiten elektromechanischen Schalters mit einem Halbleiterschalter. Die Steuereinheit kann ein Schaltsignal für den ersten Schalter, den zweiten Schalter und den Halbleiterschalter ausgeben und hierüber den erwünschten Schaltzustand der Schalter steuern. Der erste und zweite Schalter ist insbesondere ein Schließer, welcher bei Vorliegen eines Schaltsignals der Steuereinheit im geschlossenen Schaltzustand gehalten wird. Wird das Schaltsignal vom ersten oder zweiten Schalter abgeschaltet, so nimmt der Schalter automatisch aufgrund einer Rückstellkraft (z.B. eine Federkraft, welche auf einen Kontakt des jeweiligen Schalters wirkt) den geöffneten Zustand ein. Derartige Schalter sind insbesondere Relais. Der Halbleiterschalter nimmt bei Vorliegen des Schaltsignals der Steuereinheit vorzugsweise den elektrisch leitenden Zustand ein.

Das Schaltgerät umfasst einen Versorgungsanschluss, über welchen die Steuereinheit die Energie für die Schaltsignale beziehen kann. Üblicherweise wird eine dezentrale Versorgungsquelle mittels einer Leitung mit dem Versorgungsanschluss des Schaltgeräts verbunden, so dass im aktiven Betrieb des Schaltgeräts eine Versorgungsspannung über den Versorgungsanschluss anliegt. Über den Versorgungsanschluss bezieht das Schaltgerät die für die Schaltsignale erforderliche Energie. Vorzugsweise wird die gesamte geräteinterne Energieversorgung des Schaltgeräts über den Versorgungsanschluss des Schaltgeräts bezogen.

Das Schaltgerät wird vorzugsweise eingesetzt, um Drehstrommotoren und auch Einphasenwechselstrommotoren ein- und auszuschalten. Die dem Schaltgerät nachgeschalteten Motoren werden vorzugsweise durch das Schaltgerät gegen Überlast (Kurzschlussschutz und/oder thermische Überlast) geschützt.

Sofern das Schaltgerät in sicherheitskritischen Applikationen eingesetzt wird, muss ein sicheres Abschalten des dem Schaltgerät nachgeschalteten Elektromotors durch das Schaltgerät sichergestellt werden.

Bei Schaltgeräten mit Notabschaltung des dem Schaltgerät nachgeschalteten Motors ist ein mögliches Abschaltprinzip, die Versorgungsspannung des Schaltgeräts mittels eines in den Versorgungsstrang zwischen der Versorgungsquelle und dem Versorgungsanschluss zwischengeschalteten Schaltgeräts (z.B. ein Not-Aus-Schaltgerät) abzuschalten. Funktionsbedingt fallen durch das Abschalten der Versorgungsspannung die elektromechanischen Schalter des Schaltgerätes selbsttätig in den AusZustand (d.h. die Schalter sind geöffnet). Auf diese Weise wird bei einem Wegschalten der Versorgungsspannung die über das Schaltgerät zum Motor geführte Energiezufuhr abgeschaltet, so dass der Motor sicher ausgeschaltet wird. Durch das Wegschalten der Versorgungsquelle und dem automatischen Öffnen der Schalter bildet sich an den Schaltern ein Abschaltlichtbogen, welcher einen starken Verschleiß an den Schaltern verursacht, so dass die Anzahl derartiger Schaltspiele bei den Schaltgeräten üblicherweise begrenzt ist.

Aus US 5 953 189 ist eine Schaltung zur geschützten Versorgung einer elektrischen Last bekannt, die einen Schutzschalter und einen in Reihe geschalteten bidirektionalen elektronischen Schalter umfasst. Die Schaltung weist auch einen Nebenschlussschütz auf, der der für einen Dauerbetrieb der Last sorgt, und eine Steuereinrichtung, die einer Steuerelektrode von Thyristoren Zünd- und Löschsignale zuordnet. Dadurch werden die Thyristoren während einer Anlaufphase eines Motors leitend oder nicht-leitend gestellt. Sobald sich am Motor die Nenngeschwindigkeit eingestellt hat, wird der Nebenschlussschütz geschlossen, so dass der Stromfluss durch die Thyristoren zu Null wird. Die Steuereinrichtung ist über eine Klemme an einem Hauptstrompfad C angeschlossen und wird darüber mit Energie versorgt.

Die japanische Patentanmeldung JP 2010063272 A offenbart ein Spannungsversorgungsgerät, das dazu ausgebildet ist, eine konstante Gleichspannung bereitzustellen. Das Spannungsversorgungsgerät ist mit einer eingangsseitigen Spannungsmessvorrichtung versehen, die eine bereitgestellte Gleichspannung überwacht. Ferner weist das Spannungsversorgungsgerät einen Kondensator auf, der mit einer Steuereinheit verbunden ist. Der Kondensator dient bei einem Schaltvorgang im Spannungsversorgungsgerät als Energiepuffer, wenn die bereitgestellte Gleichspannung einen Schwellwert unterschreitet.

Aus WO 2011/143087 A2 ist eine Kühlvorrichtung bekannt, die einen Motor umfasst, der von einer Steuereinheit gesteuert wird. Der Motor wird über einen Frequenzumrichter, der einen Stromrichter und einen ersten Inverter aufweist, von einer Wechselspannung angetrieben. Dabei sind der erste Inverter und der Stromrichter über einen DC-Bus miteinander verbunden, der einen Kondensator aufweist. Über den DC-Bus ist ein zweiter Inverter angeschlossen, über den die Steuereinheit mit Strom versorgt wird. Die Steuereinheit ist dabei mit einer Frequenzumrichter-Steuerung verbunden, der mit dem ersten Inverter gekoppelt ist. Wird die Versorgung mit der Wechselspannung unterbrochen, wird über den Kondensator im DC-Bus der Inverter und die Steuereinheit mit Strom versorgt, so dass der Betrieb des Motors für fünf bis 15 Minuten aufrecht erhalten wird.

Der Erfindung liegt die Aufgabe zugrunde ein verbessertes Schaltgerät bereitzustellen, welches insbesondere die ordnungsgemäße Funktion des Schaltgerätes selbst sicherstellt.

Diese Aufgabe wird gelöst durch eine Vorrichtung gemäß Anspruch 1, d.h. durch ein Schaltgerät mit einer Steuereinheit, einem Versorgungsanschluss, einem Netzteil und einer ersten Strombahn, welche einen ersten elektromechanischen Schalter und eine in Reihe zum ersten Schalter geschaltete Parallelschaltung eines zweiten elektromechanischen Schalters mit einem Halbleiterschalter umfasst, wobei die Steuereinheit ein Schaltsignal für den ersten Schalter, den zweiten Schalter und den Halbleiterschalter ausgeben kann, wobei der Versorgungsanschluss mit dem Netzteil verbunden ist und die Steuereinheit über das Netzteil die Energie für die Schaltsignale bezieht, wobei das Schaltgerät einen Energiespeicher und zwei mit der Steuereinheit verbundene Messvorrichtungen umfasst, wobei der Energiespeicher zwischen dem Versorgungsanschluss und dem Netzteil zwischengeschaltet ist, so dass mittels des Energiespeichers eine über den Versorgungsanschluss erfolgende Energieversorgung des Schaltgerätes geräteintern gepuffert wird, wobei die Steuereinheit mittels der ersten Messvorrichtung ein Unterschreiten der an der Primärseite des Netzteils anliegenden Versorgungsspannung unter einen ersten Spannungsschwellwert ermitteln kann, wobei die Steuereinheit mittels der zweiten Messvorrichtung ein Unterschreiten der an der Sekundärseite des Netzteils anliegenden Versorgungsspannung unter einen zweiten Spannungsschwellwert ermitteln kann, wobei die Steuereinheit derart ausgebildet ist, dass sie die Zeitdauer vom Unterschreiten des ersten Spannungsschwellwertes bis zum Unterschreiten des zweiten Spannungsschwellwerts auswertet. Die Steuereinheit wird durch eine Auswertung der Zeitdauer vom Unterschreiten des ersten Spannungsschwellwertes bis zum Unterschreiten des zweiten Spannungsschwellwerts den Funktionszustand des internen Energiespeichers überwachen. Wird ein hinterlegter kritischer Zeitwert unterschritten, so wird durch die Steuereinheit ein entsprechendes Signal ausgegeben. Durch die Auswertung der Zeitdauer vom Unterschreiten des ersten Spannungsschwellwertes bis zum Unterschreiten des zweiten Spannungsschwellwerts mittels der Steuereinheit kann insbesondere der Verschleiß des Energiespeichers überwacht werden.

Die Aufgabe wird ferner durch ein Verfahren gemäß Anspruch 9, d.h. durch ein Verfahren eines Schaltgeräts, welches eine Steuereinheit, einen Versorgungsanschluss, ein Netzteil und eine erste Strombahn umfasst, wobei die erste Strombahn einen ersten elektromechanischen Schalter und eine in Reihe zum ersten Schalter geschaltete Parallelschaltung eines zweiten elektromechanischen Schalters mit einem Halbleiterschalter umfasst, wobei die Steuereinheit ein Schaltsignal für den ersten Schalter, den zweiten Schalter und den Halbleiterschalter ausgeben kann, wobei der Versorgungsanschluss mit dem Netzteil verbunden ist und die Steuereinheit über das Netzteil die Energie für die Schaltsignale bezieht, wobei das Schaltgerät einen Energiespeicher und zwei mit der Steuereinheit verbundene Messvorrichtungen umfasst, wobei der Energiespeicher zwischen dem Versorgungsanschluss und dem Netzteil zwischengeschaltet ist, so dass mittels des Energiespeichers die über den Versorgungsanschluss erfolgende Energieversorgung des Schaltgerätes geräteintern gepuffert wird, wobei die Steuereinheit mittels der ersten Messvorrichtung ein Unterschreiten der an der Primärseite des Netzteils anliegenden Versorgungsspannung unter einen ersten Spannungsschwellwert ermittelt und mittels der zweiten Messvorrichtung ein Unterschreiten der an der Sekundärseite des Netzteils anliegenden Versorgungsspannung unter einen zweiten Spannungsschwellwert ermittelt, wobei die Steuereinheit die Zeitdauer vom Unterschreiten des ersten Spannungsschwellwertes bis zum Unterschreiten des zweiten Spannungsschwellwerts auswertet. Dabei ist die Steuereinheit derart ausgebildet, dass sie ein Signal ausgibt, wenn die Zeit vom Unterschreiten des ersten Spannungsschwellwertes bis zum Unterschreiten des zweiten Spannungsschwellwertes einen kritischen Zeitwert unterschreitet.

Die Steuereinheit misst insbesondere die Zeit vom Unterschreiten des ersten Spannungsschwellwertes bis zum Unterschreiten des zweiten Spannungsschwellwerts. Sofern die Zeit vom Unterschreiten des ersten Spannungsschwellwertes bis zum Unterschreiten des zweiten Spannungsschwellwerts einen kritischen Zeitwert, welcher insbesondere in der Steuereinheit hinterlegt ist, unterschreitet, so gibt die Steuereinheit ein Signal aus. Auf diese Weise kann der Verschleiß des Energiespeichers überwacht werden. Mittels des kritischen Zeitwertes wird insbesondere eine Zeitdauer charakterisiert, ab welcher eine ausreichende geräteinterne Energieversorgung zur Ausgebe der Signale für den ersten und zweiten Schritt durch den Energiespeicher sichergestellt ist bzw. gefährdet ist.

Sobald der Energiespeicher nicht mehr die Kapazität für eine ordnungsgemäße reguläre Abschaltung (Durchführen des ersten und zweiten Schritts) besitzen (z.B. Aufgrund von Alterung) wird der kritische Zeitwert unterschritten. Die Steuereinheit gibt daraufhin ein Signal aus. Mittels des Signals wird vorzugsweise ein Gerätefehler generiert, so dass ein Wiedereinschalten des Schaltgerätes verhindert wird, eine LED oder ein Display des Schaltgerätes angesteuert und/oder eine Diagnosemeldung an eine dezentrale Vorrichtung (z.B. übergeordnete Steuerung) ausgegeben. Auf diese Weise kann eine Betriebsmannschaft rechtzeitig auf die Wartungssituation hingewiesen werden und kann folglich entsprechend reagieren.

Vorteilhafte Weiterbildungen der Erfindung sind in den abhängigen Ansprüchen 2 bis 8 sowie 9 bis 12 angegeben.

Im aktiven Betrieb des dem Schaltgerät nachgeschalteten Elektromotors wird über die erste Strombahn des Schaltgerätes die Energiezufuhr des Elektromotors geleitet.

Bei Vorliegen des Schaltsignals der Steuereinheit nimmt der erste und zweite Schalter den geschlossenen Schaltzustand ein. Wird das Schaltsignal am ersten und/oder zweiten Schalter abgeschaltet; d.h. am Schalter liegt kein Schaltsignal an, so nimmt der entsprechende Schalter automatisch den geöffneten Schaltzustand ein. Bei einem Schaltsignal liegt insbesondere eine Spannung über dem Steuerstromkreis des Schalters an, insbesondere ca. 12 Volt. Bei keinem Schaltsignal liegt insbesondere keine Spannung über dem Steuerstromkreis des Schalters an.

Die erste Messvorrichtung ist insbesondere im Bereich zwischen dem Versorgungsanschluss und dem Netzteil angeordnet. Mittels der ersten Messvorrichtung kann die Steuereinheit die Energieversorgung auf der Primärseite des Netzteils (d.h. der elektrischen Verbindung des Netzteils zum Versorgungsanschluss) überwachen. Mittels der ersten Messvorrichtung wird insbesondere die vorliegende Spannung auf der Primärseite des Netzteils ermittelt.

Die zweite Messvorrichtung ist insbesondere im Bereich zwischen dem Netzteil und der Steuereinheit angeordnet. Mittels der zweiten Messvorrichtung kann die Steuereinheit die Energieversorgung auf der Sekundärseite des Netzteils (d.h. der elektrischen Verbindung des Netzteils zur Steuereinheit) überwachen. Mittels der zweiten Messvorrichtung wird insbesondere die vorliegende Spannung auf der Sekundärseite des Netzteils ermittelt.

Über den Versorgungsanschluss erfolgt vorzugsweise lediglich die geräteinterne Energieversorgung des Schaltgeräts.

Vorzugsweise liegen am Versorgungsanschluss im ordnungsgemäßen Betrieb des Schaltgeräts ca. 24 Volt an.

Das Netzteil des Schaltgerätes wandelt insbesondere die am Versorgungsanschluss anliegende Spannung in eine andere Spannung um.

Der Halbleiterschalter ist vorzugsweise ein Triac oder zwei antiparallel geschaltete Thyristoren.

Wird der Versorgungsanschluss des Schaltgerätes mit einer externen Versorgungsquelle ordnungsgemäß verbunden, so liegt eine Spannung über dem Versorgungsanschluss an. Auf diese Weise wird das Netzteil und hierüber die Steuereinheit mit Energie versorgt.

Der Energiespeicher, welcher insbesondere durch mindestens einen Kondensator ausgebildet ist, ist zwischen dem Versorgungsanschluss und dem Netzteil zwischengeschaltet, so dass er die über den Versorgungsanschluss erfolgende Energieversorgung des Schaltgerätes geräteintern puffert. Der Energiespeicher wird insbesondere über die am Versorgungsanschluss anliegende Spannung aufgeladen.

Die Steuereinheit kann mittels der ersten Messvorrichtung ein Unterschreiten der primärseitigen Spannung am Netzteil unter einen ersten Spannungsschwellwert detektieren. Dieser erste Spannungsschwellwert charakterisiert insbesondere einen Zustand des Schaltgerätes, in welchem die Energieversorgung des Netzteils über die externe Versorgungsquelle gefährdet ist oder nicht mehr vorliegt. Ein derartiger Zustand wird beispielsweise durch ein Unterbrechen der elektrischen Verbindung des Versorgungsanschlusses zur Versorgungsquelle herbeigeführt.

Wird die elektrische Verbindung des Versorgungsanschluss zur Versorgungsquelle unterbrochen, so wird das Netzteil lediglich durch den aufgeladenen Energiespeicher geräteintern mit Energie versorgt. Ein derartiger Zustand wird durch ein Unterschreiten der Versorgungsspannung im primärseitigen Bereich des Netzteils unter den ersten Spannungsschwellwert durch die Steuereinheit detektiert. Die geräteinterne Energieversorgung des Netzteils mittels des Energiespeichers kann jedoch lediglich für eine bestimmte Zeitdauer aufrechterhalten werden.

Durch eine Überwachung der Spannung auf der Sekundärseite des Netzteils mittels der zweiten Messvorrichtung kann ein Rückschluss auf den Entladevorgang des Energiespeichers gewonnen werden.

Vorzugsweise wird durch die Steuereinheit überwacht, ob der Energiespeicher eine ausreichende geräteinterne Energieversorgung des Netzteils, insbesondere der Steuereinheit, für eine vorbestimmte Zeitdauer sicherstellt. Die Steuereinheit kann anhand einer Auswertung der Zeitdauer vom Unterschreiten des ersten Spannungsschwellwertes bis zum Unterschreiten des zweiten Spannungsschwellwerts den ordnungsgemäßen Funktionszustand des Energiespeichers überwachen.

Die Steuereinheit gibt vorzugsweise ein Signal aus oder verhindert ein Wiedereinschalten des nachgeschalteten Elektromotors, sofern die Zeitdauer vom Unterschreiten des ersten Spannungsschwellwertes bis zum Unterschreiten des zweiten Spannungsschwellwerts unter einem kritischen Zeitwert liegt.

In einer vorteilhaften Ausführungsform der Erfindung ist die Steuereinheit derart ausgebildet, dass sie bei einem Ermitteln eines Unterschreitens des ersten Spannungsschwellwerts an der Primärseite des Netzteils mittels der Energie des Energiespeichers:
- in einem ersten Schritt den Halbleiterschalter elektrisch leitend schaltet und anschließend den zweite Schalter öffnet,
- nach dem ersten Schritt in einem zweiten Schritt den Halbleiterschalter elektrisch nichtleitend schaltet und anschließend den ersten Schalter öffnet.

Nachdem die Steuereinheit das Unterschreiten des ersten Spannungsschwellwerts mittels der ersten Messvorrichtung ermittelt hat, erfolgt das Durchführen des ersten und zweiten Schritts automatisch durch die Steuereinheit.

Die Steuereinheit kann mittels der ersten und zweiten Messvorrichtung die über den Versorgungsanschluss erfolgende Energieversorgung für das Schaltsignal der Steuereinheit überwachen. Dadurch, dass mittels der ersten Messvorrichtung der Energiefluss im Bereich der elektrischen Verbindung zwischen dem Versorgungsanschluss und dem Netzteil überwacht wird, kann die über den Versorgungsanschluss direkt am Schaltgerät eingespeiste Spannung der Versorgungsquelle überwacht werden. Auf diese Weise kann seitens der Steuereinheit unmittelbar auf einen Spannungsabfall am Versorgungsanschluss reagiert werden.

Durch die Überwachung der über den Versorgungsanschluss erfolgenden Energieversorgung mittels der ersten Messvorrichtung kann bei einem Absinken der Versorgungsspannung in einen, vorzugsweise in der Steuereinheit oder Messvorrichtung hinterlegten, kritischen Bereich ein gesteuertes Abschalten der über die erste Strombahn erfolgenden Energieversorgung des nachgeschalteten Elektromotors erfolgen. Der kritische Bereich der Versorgungsspannung wird mittels des ersten Spannungsschwellwertes vom ordnungsgemäßen Bereich der Versorgungsspannung, in welchem eine ordnungsgemäße Energieversorgung des Schaltgerätes über den Versorgungsanschluss vorliegt, getrennt. Der erste Spannungsschwellwert ist insbesondere derart bemessen, dass sofern der erste Spannungsschwellwert überschritten wird eine ausreichende Energieversorgung des Schaltgerätes über den Versorgungsanschluss vorliegt, so dass eine ordnungsgemäße Schaltsignalausgabe durch die Steuereinheit sichergestellt ist, und sofern der erste Spannungsschwellwert unterschritten wird eine Energieversorgung über den Versorgungsanschluss erfolgt, welche eine ordnungsgemäße Schaltsignalausgabe durch die Steuereinheit gefährdet, insbesondere nicht ermöglicht.

Der kritische Bereich charakterisiert vorzugsweise einen Spannungsbereich am Versorgungsanschluss, welcher unterhalb von ca. 70%, vorzugsweise ca. 50%, der am Versorgungsanschluss anzuschließenden maximal zulässigen Spannung liegt. Der erste Spannungsschwellwert liegt somit vorzugsweise im Bereich zischen ca. 50% - 70% der am Versorgungsanschluss anzuschließenden maximal zulässigen Spannung.

Wurde durch die Steuereinheit eine kritische Energieversorgung mittels der ersten Messvorrichtung detektiert (eine Unterschreitung des ersten Spannungsschwellwertes wurde detektiert), so wird mittels der Steuereinheit automatisch in einem ersten Schritt der Halbleiterschalter elektrisch leitend geschaltet und der zweite Schalter nach dem Schließen des Halbleiterschalters geöffnet (im ersten Schritt bleibt der erste Schalter geschlossen). Nach dem ersten Schritt wird automatisch durch die Steuereinheit in einem zweiten Schritt zunächst der Halbleiterschalter elektrisch nichtleitend geschaltet und anschließend der erste Schalter geöffnet. Die erforderliche Energie zur Ausgabe der notwendigen Schaltsignale für den ersten und zweiten Schritt bezieht die Steuereinheit vom Energiespeicher.

Sinkt die am Versorgungsanschluss anliegende Spannung in den kritischen Bereich, so dass der erste Spannungsschwellwert unterschritten wird, so wird das Ausgeben der erforderlichen Schaltsignale für den ersten und zweiten Schritt durch die Steuereinheit durch die im Energiespeicher gepufferte Energie sichergestellt. Dadurch, dass der Energiespeicher direkt mittels der am Versorgungsanschluss anliegenden Spannung aufgeladen wird, kann bei einer entsprechenden Dimensionierung des Energiespeichers eine gesteuerte Abschaltung des nachgeschalteten Elektromotors (Durchführen des ersten und zweiten Schritts) vorzugsweise bei einem konstanten Spannungsniveau erfolgen. Der Spannungseinbruch auf der Sekundärseite des Netzteils tritt vorzugsweise erst nach Durchführung des ersten und zweiten Schrittes ein.

Die automatische gesteuerte Abschaltung des nachgeschalteten Elektromotors mittels des ersten und zweiten Schritts erfolgt insbesondere unmittelbar nachdem festgestellt wurde, dass der erste Spannungsschwellwert unterschritten wurde.

Ein Vorteil besteht darin, dass mit geringem zusätzlichem Hardwareaufwand im Schaltgerät ein verbessertes Schaltverhalten erzielt werden kann. Insbesondere kann bezüglich einer Notabschaltung über den Versorgungsanschluss eine erhöhte Anzahl an Schaltspielen für das Schaltgerät erzielt werden. Der durch ein Abschalten der Versorgungsspannung an den Schaltern üblicherweise erfolgende Verschleiß kann durch das gesteuerte Abschalten verhindert werden. Die hierzu erforderlich Energie für das Schaltsignal wird durch den Energiespeicher bereitgestellt. Dadurch, dass der Energiespeicher auf der Primärseite des Netzteils (zum Versorgungsanschluss gerichtete Seite) angeordnet ist, kann eine verbesserte geräteinterne Energiepufferung erfolgen.

In einer weiteren vorteilhaften Ausführungsform der Erfindung ist die Steuereinheit derart ausgebildet, dass sie mittels der ersten Messvorrichtung die Spannung auf der Primärseite des Netzteils ermittelt und in Abhängigkeit der ermittelten Spannung den kritischen Zeitwert bestimmt.

Mit dem Wissen des Energieverbrauches des Schaltgerätes zur Ausgabe der Signale für den ersten und zweiten Schritt und der Kenntnis der Versorgungsspannungshöhe vor dem Spannungsausfall kann eine minimal notwendige Entladezeit für den Energiespeicher (z.B. der/die Pufferkondensator/-en) ermittelt werden. Diese minimal zulässige Entladezeit, welche durch den kritischen Zeitwert charakterisiert wird, wird für die Überwachung der ordnungsgemäßen Funktion des Energiespeichers (z.B. der Kapazität des Pufferkondensators) verwendet.

Dadurch, dass die vorliegende Spannungshöhe auf der Primärseite des Netzteils vor dem Spannungsausfall ermittelt wird, kann ein Rückschluss auf den Ladezustand des Energiespeichers gewonnen werden, so dass hieraus der kritische Zeitwert bestimmt werden kann. Der kritische Zeitwert kann beispielsweise mittels eines in der Steuereinheit hinterlegten Algorithmus berechnet werden, welcher die vorliegende Spannungshöhe auf der Primärseite des Netzteils vor dem Spannungsausfall berücksichtigt. Es ist jedoch ebenso denkbar, dass der kritische Zeitwert in der Steuereinheit in einer Tabelle hinterlegt ist, so dass in Abhängigkeit der vor dem Spannungsausfall ermittelten Spannung mittels der ersten Messvorrichtung der kritische Zeitwert bestimmt wird.

Liegt die Zeitdauer vom Unterschreiten des ersten Spannungsschwellwertes bis zum Unterschreiten des zweiten Spannungsschwellwerts unterhalb des kritischen Zeitwertes, so wird davon ausgegangen, dass die Kapazität des Energiespeichers zu gering geworden ist um die gesteuerte Abschaltung ordnungsgemäß durchführen zu können.

Durch diese Vorgehensweise kann der Energiespeicher überwacht und das Schaltgerät vor den negativen Folgen (Verkleben / Verschweißen der ersten und zweiten elektromechanischen Schalter) zuverlässig geschützt werden. Wird als Energiespeicher ein Kondensator verwendet, so kann z.B. eine Kondensatoralterung erkannt werden.

In einer weiteren vorteilhaften Ausführungsform der Erfindung ist die Steuereinheit derart ausgebildet, dass sie in Abhängigkeit des nachgeschalteten Motorzustandes (eingeschalteter Elektromotor / ausgeschalteter Elektromotor) den kritischen Zeitwert bestimmt.

In einer weiteren vorteilhaften Ausführungsform der Erfindung kann der Energiespeicher über den Versorgungsanschluss aufgeladen werden. Der Energiespeicher umfasst vorzugsweise mindestens einen Kondensator, welcher mit dem Versorgungsanschluss elektrisch leitend verbunden ist. Es ist ebenso denkbar, dass als Energiespeicher mehrere Kondensatoren eingesetzt werden.

In einer weiteren vorteilhaften Ausführungsform der Erfindung ist der Energiespeicher derart ausgebildet, dass er die Ausgabe der erforderlichen Schaltsignale mittels der Steuereinheit für die ersten und zweiten Schritte sicherstellt. Die Ausgabe der ersten und zweiten Schaltsignale über die Steuereinheit ist somit lediglich mittels der im Energiespeicher gepufferten Energie möglich.

In einer weiteren vorteilhaften Ausführungsform der Erfindung umfasst das Schaltgerät eine zweite Strombahn, welche einen ersten elektromechanischen Schalter und eine in Reihe zum ersten Schalter geschaltete Parallelschaltung eines zweiten elektromechanischen Schalters mit einem Halbleiterschalter umfasst, wobei die Steuereinheit ein Schaltsignal für den ersten Schalter, den zweiten Schalter und den Halbleiterschalter der zweiten Strombahn ausgeben kann, wobei die Steuereinheit derart ausgebildet ist, dass sie, sofern die mittels der Messvorrichtung überwachte Energieversorgung in einen kritischen Bereich fällt, mittels der Energie des Energiespeichers:
- in einem ersten Schritt den Halbleiterschalter der zweiten Strombahn elektrisch leitend schaltet und anschließend den zweiten Schalter der zweiten Strombahn öffnet,
- nach dem ersten Schritt in einem zweiten Schritt den Halbleiterschalter der zweiten Strombahn elektrisch nichtleitend schaltet und anschließend den ersten Schalter der zweiten Strombahn öffnet.

Die Ansteuerung der zweiten Strombahn mittels der Steuereinheit erfolgt vorzugsweise analog zur ersten Strombahn. Die zweite Strombahn ist vorzugsweise analog zur ersten Strombahn ausgebildet.

Das Schaltgerät kann ferner eine dritte Strombahn umfassen. Die dritte Strombahn kann hierbei analog zur ersten oder zweiten Strombahn ausgebildet sein. Die Ansteuerung der Schalter der dritten Strombahn kann ebenso in analoger Weise zur ersten Strombahn erfolgen.

In einer weiteren vorteilhaften Ausführungsform der Erfindung ist die Steuereinheit derart ausgebildet, dass sie im zweiten Schritt den Halbleiterschalter im Stromnulldurchgang, der über ihn erfolgenden Energiezufuhr, in den elektrisch nichtleitenden Zustand schaltet. Hierdurch wird die Energieversorgung zum Elektromotor unterbrochen, so dass anschließend der erste Schalter der jeweiligen Strombahn stromlos geöffnet werden kann. Das Abschalten der Energieversorgung zum nachgeschalteten Elektromotor kann somit ohne Lichtbogenbildung an den jeweiligen elektromechanischen Schaltern erfolgen. Der ansonsten erfolgende Verschleiß der Schalter wird vermieden.

In einer weiteren vorteilhaften Ausführungsform der Erfindung umfasst ein System, zum sicheren Betreiben eines Elektromotors, das beschriebene Schaltgerät, eine Versorgungsquelle und eine Schaltvorrichtung, wobei die Schaltvorrichtung in den Versorgungsstrang der Versorgungsquelle zum Versorgungsanschluss des Schaltgeräts derart zwischengeschaltet ist, dass durch eine Betätigung der Schaltvorrichtung eine durch die Versorgungsquelle erfolgende Energieversorgung zum Schaltgerät unterbrochen wird. Die Schaltvorrichtung ist beispielsweise ein Not-Aus-Schaltgerät.

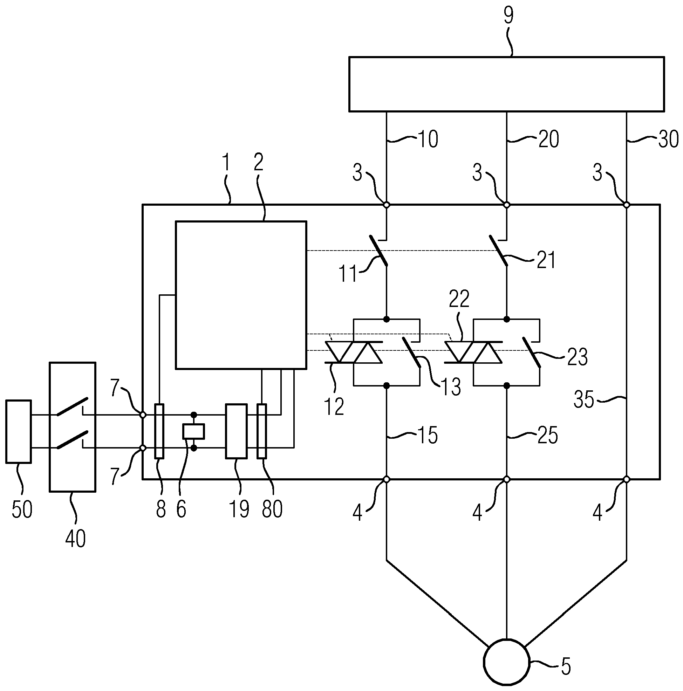

Im Folgenden werden die Erfindung und Ausgestaltungen der Erfindung anhand des in der Figur dargestellten Ausführungsbeispiels näher beschrieben und erläutert.

Die Figur zeigt eine schematische Darstellung eines Systems zum sicheren Betreiben eines Elektromotors 5. Das System umfasst ein Versorgungsnetz 9, den Elektromotor 5, ein Schaltgerät 1, eine Versorgungsquelle 50 und ein Not-Aus-Schaltgerät 40.

Das Schaltgerät 1 ist mit seinen drei eingangsseitigen Anschlussstellen 3 mit dem Versorgungsnetz 9 und mit seinen drei ausgangsseitigen Anschlussstellen 4 mit dem Elektromotor 5 verbunden. Der Elektromotor 5 ist ein Asynchronmotor. Das Versorgungsnetz 9 ist ein Dreiphasenwechselstromnetz einer industriellen Niederspannungsschaltanlage. Das Schaltgerät 1 ist ein Motorstarter 1, mittels welchem die Energiezufuhr des nachgeschalteten Elektromotors 5 gesteuert werden kann.

Eine erste Phase 10 des Versorgungsnetzes 9 ist mittels einer Leitung mit der eingangsseitigen Anschlussstelle 3 verbunden und wird über eine erste Strombahn 15 des Motorstarters 1 geräteintern zur ausgangsseitigen Anschlussstelle 4 geführt und anschließend mittels einer weiteren Leitung zum Elektromotor 5 geführt. Die erste Strombahn 15 des Motorstarters 1 verbindet geräteintern die eingangsseitige Anschlussstelle 3 des Motorstarters 1 mit der ausgangsseitigen Anschlussstelle 4 des Motorstarters 1. Die erste Strombahn 15 umfasst einen ersten elektromechanischen Schalter 11, einen Halbleiterschalter 12, hier ein Triac, und einen zweiten elektromechanischen Schalter 13. Der erste Schalter 11 ist in Serie zu der Parallelschaltung des Halbleiterschalters 12 mit dem zweiten Schalter 13 geschaltet. Über die erste Strombahn 15 wird folglich die erste Phase 10 des Versorgungsnetzes 9 zum Elektromotor 5 geführt.

Eine zweite Phase 20 des Versorgungsnetzes 9 ist mittels einer Leitung mit der eingangsseitigen Anschlussstelle 3 verbunden und wird über eine zweite Strombahn 25 des Motorstarters 1 geräteintern zur ausgangsseitigen Anschlussstelle 4 geführt und anschließend mittels einer weiteren Leitung zum Elektromotor 5 geführt. Die zweite Strombahn 25 des Motorstarters 1 verbindet geräteintern die eingangsseitige Anschlussstelle 3 des Motorstarters 1 mit der ausgangsseitigen Anschlussstelle 4 des Motorstarters 1. Die zweite Strombahn 25 umfasst einen ersten elektromechanischen Schalter 21, einen Halbleiterschalter 22, hier ein Triac, und einen zweiten elektromechanischen Schalter 23. Der erste Schalter 21 ist in Serie zu der Parallelschaltung des Halbleiterschalters 22 mit dem zweiten Schalter 23 geschaltet. Über die zweite Strombahn 25 wird folglich die zweite Phase 20 des Versorgungsnetzes 9 zum Elektromotor 5 geführt.

Eine dritte Phase 30 des Versorgungsnetzes 9 ist mittels einer Leitung mit der eingangsseitigen Anschlussstelle 3 verbunden und wird über eine dritte Strombahn 35 des Motorstarters 1 geräteintern zur ausgangsseitigen Anschlussstelle 4 geführt und anschließend mittels einer weiteren Leitung zum Elektromotor 5 geführt. Die dritte Strombahn 35 des Motorstarters 1 verbindet geräteintern die eingangsseitige Anschlussstelle 3 des Motorstarters 1 mit der ausgangsseitigen Anschlussstelle 4 des Motorstarters 1. Der abgebildete Motorstarter 1 ist ein 2-phasig gesteuerter Motorstarter 1, so dass die dritte Strombahn eine beständige geräteinterne elektrische Kontaktierung zwischen der eingangsseitigen und ausgangsseitigen Anschlussstelle 3,4 bildet. Es ist jedoch ebenso denkbar, dass die dritte Strombahn 35 ebenso mindestens einen Schalter umfasst oder analog zur ersten und/oder zweiten Strombahn 15,25 des Motorstarters 1 ausgebildet ist.

Der Motorstarter 1 umfasst eine Steuereinheit 2 mittels welcher die Schaltstellung der elektromechanischen Schalter 11,13,21,23 und der Halbleiterschalter 12,22 gesteuert wird. Hierfür kann die Steuereinheit 2 Schaltsignale an die Schalter 11,12,13,21,22,23 ausgeben. Durch das Schaltsignal wird eine Spannung am Schalter 11,12,13,21,22,23 angelegt. Die elektromechanischen Schalter 11,13,21,23 sind mit einer Federkraft beaufschlagt, so dass sie zum Halten der geschlossenen Stellung mit dem Schaltsignal angesteuert werden müssen, da sie ansonsten selbständig den geöffneten Schaltzustand einnehmen. D.h. sobald das Schaltsignal am elektromechanischen Schalter 11,13,21,23 entfernt wird, nimmt dieser automatisch die geöffnete Schaltstellung ein. Mittels der Steuereinheit 2 kann der jeweilige Halbleiterschalter 12,22 in einen elektrisch leitenden Zustand und einen elektrisch nicht leitenden Zustand (gesperrten Zustand) geschaltet werden. Im elektrisch nicht leitenden Zustand des Halbleiterschalters 12,22 wird die Energieübertragung über den Halbleiterschalter 12,22 gesperrt.

Die ersten elektromechanischen Schalter 13,23 sind Schließer eines ersten Relais. Die zweiten elektromechanischen Schalter 11,21 sind Schließer eines zweiten Relais. Es ist jedoch ebenso denkbar, dass die einzelnen Schalter oder lediglich die ersten oder zweiten Schalter 11,13,21,23 mittels eines separaten Relais angesteuert werden.

Der Motorstarter 1 bezieht über seinen Versorgungsanschluss 7 die geräteinterne Energieversorgung. Hierfür ist der Versorgungsanschluss 7 mittels zweier Leiter mit einer Versorgungsquelle 50, welche z.B. ca. 24 Volt bereitstellt, verbunden. Am Versorgungsanschluss 7 liegt somit bei einer bestehenden elektrisch leitenden Verbindung zur Versorgungsquelle 7 eine Versorgungsspannung von ca. 24 Volt an. Mittels der über den Versorgungsanschluss 7 bezogenen elektrischen Energie kann die Steuereinheit 2 die erforderlichen Schaltsignale an die jeweiligen Schalter 11,12,13,21,22,23 ausgegeben.

Innerhalb des Motorstarters 1 ist der Versorgungsanschluss 7 mit einem Netzteil 19 des Schaltgerätes 1 elektrisch leitend verbunden. Das Netzteil 19 passt die über den Versorgungsanschluss 7 bezogene Spannung der Spannungsquelle 50 derart an, dass die Steuereinheit 2 über das Netzteil 19 die passende elektrische Spannung für die Schaltsignale beziehen kann.

Der Motorstarter 1 umfasst ferner einen Energiespeicher 6, welcher in der elektrisch leitenden Verbindung des Versorgungsanschlusses 7 zum Netzteil 19 integriert ist. Der Energiespeicher 6 ist ein Kondensator, welcher über den Versorgungsanschluss 7 aufgeladen wird. Der Energiespeicher 6 kann die Energieversorgung des Netzteils 19 puffern. Sofern die Energieversorgung des Schaltgerätes über die Versorgungsquelle 50 entfällt, wird mittels des Energiespeichers 6 die Energieversorgung des Netzteils 19 entsprechend der Kapazität des Energiespeichers 6 gepuffert; d.h. kurzzeitig aufrechterhalten. Die Kapazität des Energiespeichers 6 ist derart ausgelegt, dass eine Energieversorgung des Netzteils 19 lediglich mittels der Energie des Energiespeichers 6 solange sichergestellt ist, dass die Steuereinheit 2 ein gesteuertes Abschalten des nachgeschalteten Verbrauchers 5 durchführen kann (Durchführen des ersten und zweiten Schrittes).

Zwischen dem Versorgungsanschluss 7 und dem Netzteil 19 ist eine erste Messvorrichtung 8 des Motorstarters 1 angeordnet. Die Steuereinheit 2 kann mittels der ersten Messvorrichtung 8 die über den Versorgungsanschluss 7 erfolgende Versorgungsspannung des Netzteils 19 an dessen Primärseite überwachen. Hierbei wird die mittels der Messvorrichtung 8 ermittelte Spannung mit einem im Schaltgerät 1 hinterlegten ersten Spannungsschwellwert verglichen.

Der erste Spannungsschwellwert liegt bei 50% der am Versorgungsanschluss 7 anzuschließenden maximal zulässigen Spannung. Liegt die ermittelte Spannung oberhalb des ersten Spannungsschwellwerts, so erfolgt über den Versorgungsanschluss 7 für das Schaltgerät 1 eine ausreichende Energieversorgung, welche eine ordnungsgemäße Schaltsignalausgabe durch die Steuereinheit 2 sicherstellt. Wird durch die ermittelte Spannung jedoch der erste Spannungsschwellwert unterschritten, so erfolgt über den Versorgungsanschluss 7 eine Energieversorgung, welche eine ordnungsgemäße Schaltsignalausgabe durch die Steuereinheit 2 gefährdet. Die über den Versorgungsanschluss 7 erfolgende Energieversorgung befindet sich somit im kritischen Bereich. Ergibt die Überwachung der Versorgungsspannung mittels der ersten Messvorrichtung 8, dass am Versorgungsanschluss 7 eine Spannung unterhalb von 50% der am Versorgungsanschluss 7 anzuschließenden maximal zulässigen Spannung anliegt, so wird durch die Steuereinheit 2 unmittelbar ein gesteuertes Abschalten mittels der vom Energiespeicher 6 gepufferten Energie durchgeführt.

Zwischen der Versorgungsquelle 50 und dem Motorstarter 1 ist das Not-Aus-Schaltgerät 40 derart angeordnet, dass es die über die beiden Leiter erfolgende Energieversorgung des Motorstarters 1 unterbrechen kann. Das Not-Aus-Schaltgerät 40 umfasst hierfür jeweils zwei Schaltelemente, welche jeweils eine Leitung unterbrechen können.

Sofern am Versorgungsanschluss 7 eine ordnungsgemäße Versorgungsspannung anliegt kann der Motorstarter 1 für den nachgeschalteten Elektromotor 5 eine Energieversorgung herstellen. Die mittels der ersten Messvorrichtung 8 ermittelte Versorgungsspannung liegt oberhalb des ersten Spannungsschwellwertes und somit nicht im kritischen Bereich.

Liegt ein laufender Elektromotor 5 im Nennbetrieb vor, so sind innerhalb des Motorstarters 1 die ersten Schalter 11,21 geschlossen, die Halbleiterschalter 12,22 elektrisch nicht leitend geschaltet und die zweiten Schalter 13,23 geschlossen. Ein mögliches Abschaltprinzip des dem Motorstarter 1 nachgeschalteten Elektromotors 5 ist es, die Versorgungsspannung des Motorstarters 1 mittels des in den Versorgungsstrang zwischen der Versorgungsquelle 50 und dem Versorgungsanschluss 7 zwischengeschalteten Not-Aus-Schaltgeräts 40 abzuschalten. Hierfür wird das Not-Aus-Schaltgerät 40 betätigt, so dass es mindestens eines seiner Schaltelemente öffnet.

Erfolgt eine derartige Betätigung des Not-Aus-Schaltgeräts 40, so liegt über den Versorgungsanschluss 7 keine Spannung an. Die Versorgungsspannung an der Primärseite des Netzteils 19 sinkt, so dass der erste Spannungsschwellwert unterschritten wird. Dieser Zustandswechsel wird von der Steuereinheit 2 mittels der ersten Messvorrichtung 8 detektiert, so dass die Steuereinheit 2 daraufhin selbständig ein gesteuertes Abschalten des nachgeschalteten Elektromotors 5 durchführt. Die Energie zur Ausgabe der notwendigen Schaltsignale wird hierbei durch den Energiespeicher 6 sichergestellt. Mittels der im Energiespeicher 6 gepufferten Energie wird folglich weiterhin das Netzteil 19 und hierüber die Steuereinheit 2 mit Energie versorgt.

Bei dem gesteuerten Abschalten des nachgeschalteten Motors 5 werden durch die Steuereinheit 2 in einem ersten Schritt die Halbleiterschalter 12,22 in den elektrisch leitenden Zustand geschaltet. Die ersten Schalter 11,21 werden weiterhin mittels eines Schaltsignals der Steuereinheit 2 angesteuert, so dass sie in der geschlossenen Stellung verweilen. Funktionsbedingt fallen durch das Wegschalten der Schaltsignale am ersten Relais die zweiten Schalter 13,23 selbsttätig in den geöffneten Zustand. Die Energieversorgung des Elektromotors 5 erfolgt somit weiterhin über den Motorstarter 1. Die notwendige Energie für die auszugebenden Schaltsignale (Halbleiterschalter 12,22 und ersten Schalter 11,21) während des ersten Schritts durch die Steuereinheit 2 wird durch den Energiespeicher 6 bereitgestellt.

In einem auf den ersten Schritt folgenden zweiten Schritt werden durch die Steuereinheit 2 die Halbleiterschalter 12,22 im Stromnulldurchgang in den elektrisch nichtleitenden Zustand geschaltet. Es erfolgt somit ein lichtbogenfreies Unterbrechen der Energieversorgung über der ersten und zweiten Strombahn 15,25. Dieser Schaltvorgang erfolgt unmittelbar nachdem sichergestellt ist, dass die zweiten Schalter 13,23 geöffnet sind. Sobald die Energieversorgung über die Halbleiter 12,22 unterbrochen ist, ist die Energieversorgung zum nachgeschalteten Elektromotor 5 unterbrochen. Nachdem sichergestellt ist, dass die Energieversorgung über die Halbleiterschalter 12,22 unterbrochen ist, wird das Schaltsignal vom zweiten Relais und somit von den ersten Schaltern 11,21 weggeschaltet. Funktionsbedingt fallen durch das Wegschalten des Schaltsignals am zweiten Relais die ersten Schalter 11,21 selbsttätig in den geöffneten Zustand. Die ersten Schalter 11,21 werden somit stromlos geöffnet. Die Energie für die auszugebenden Schaltsignale während des zweiten Schritts durch die Steuereinheit 2 wird durch den Energiespeicher 6 bereitgestellt.

Durch eine ausreichend bemessene Pufferung der Versorgungsspannung im Energiespeicher 6 und die interne Überwachung der am Versorgungsanschluss 7 anliegenden Versorgungsspannung mittels der ersten Messvorrichtung 8, kann bei dem Abschalten der Versorgungsspannung ein gesteuertes Unterbrechen der Energieversorgung zum nachgeschalteten Elektromotor 5 erfolgen, ohne dass es zu einer Lichtbogenbildung an den Schaltern 11,13,21,23 kommt. Der Verschleiß des Schaltgeräts 1 kann somit minimiert werden.

Sinkt durch Ausfall oder Abschalten der Versorgungsspannung die von der ersten Messvorrichtung 8 erfasste Versorgungsspannung unter den vorgegebenen Spannungsschwellwert, so wird durch die Steuereinheit 2 unverzüglich das gesteuerte Abschalten des Elektromotors 5 eingeleitet (Durchführen des ersten und zweiten Schritts). Das gesteuerte Abschalten entspricht vorzugsweise dem Abschaltvorgang, welchen das Schaltgerät 1 bei einem normalen Abschaltvorgang (betriebsmäßiges Abschalten des Elektromotors 5 über Steuereingang) über die Steuereinheit 2 durchführt.

Die Pufferung des Energiespeichers 6 ist derart ausgelegt, dass ausreichend Energie zum Ansteuern der Schalter 11,12,13, 21,22,23 bis zum Ende des gesteuerten Abschaltvorgangs zur Verfügung steht. Auf diese Weise kann auch bei einer Notabschaltung ein regulärer Abschaltvorgang durchgeführt werden, ohne die mechanischen Schalter 11,13,21,23 zusätzlich zu belasten. Es erfolgt somit ein verschleißfreies Abschalten bei einem Nothalt, der durch Abschalten der Versorgungsspannung realisiert ist. Durch den gesteuerten Abschaltvorgang über verschleißfreie Halbleiterschalter 12,22 und die Pufferung der Versorgungsspannung für die Dauer des gesteuerten Abschaltvorganges kann eine deutlich erhöhte Lebensdauer der mechanischen Schalter 11,13,21,23 und damit des gesamten Schaltgerätes 1 erreicht werden.

Dadurch, dass mittels des Energiespeichers 6 die Energiepufferung auf der Primärseite des Netzteils 19 (zum Versorgungsanschluss 7 gerichtet) erfolgt, kann bei einem Spannungseinbruch am Versorgungsanschluss 7 die Sekundärseite des Netzteils 19 ihren Spannungspegel bis zu einem gewissen Zeitpunkt konstant halten. Auf diese Weise kann die Abschaltung dauerhaft auf einem konstanten Spannungsniveau durchgeführt werden. Der Spannungseinbruch auf der Sekundärseite tritt vorzugsweise erst nach der Beendigung der gesteuerten Abschaltsequenz (erster und zweiter Schritt) auf. Dadurch, dass der Energiespeicher 6 auf der Primärseite angeordnet ist, kann im Vergleich zu einer Anordnung des Energiespeichers 6 auf der Sekundärseite des Netzteils 19 ein Spannungsabfall am Versorgungsanschluss 7 und somit der kritische Bereich schneller detektiert werden, so dass die gesteuerte Abschaltsequenz früher eingeleitet werden kann. Die Notabschaltung wird somit frühzeitiger eingeleitet. Die Zuverlässigkeit des Systems wird hierdurch verbessert.

Vorzugsweise wird bei einem Eintritt in den kritischen Bereich mittels der gepufferten Energie des Energiespeichers 6 ferner eine Diagnosemeldung (z.B. Meldung der regulären Abschaltung) über ein Kommunikationsmittel des Schaltgerätes 1 an ein mit dem Schaltgerät verbundene Geräteeinheit (z.B. eine übergeordnete Steuerung) abgesetzt.

Das Schaltgerät 1 umfasst ferner eine mit der Steuereinheit 2 verbundene zweite Messvorrichtung 80, welche derart angeordnet ist, dass die Steuereinheit 2 mittels der zweiten Messvorrichtung 80 die Versorgungsspannung an der Sekundärseite des Netzteils 19 überwachen kann.

Im Schaltgerät, insbesondere in der Steuereinheit 2, ist ferner ein kritischer Zeitwert und ein zweiter Spannungsschwellwert, welcher niedriger als der erste Spannungsschwellwert ist, hinterlegt.

Durch eine Auswertung der Zeitdauer vom Unterschreiten des ersten Spannungsschwellwertes bis zum Unterschreiten des zweiten Spannungsschwellwerts kann die Steuereinheit 2 einen Rückschluss auf den Funktionszustand des Energiespeichers 6 gewinnen. Hierfür vergleicht die Steuereinheit 2 die ermittelte Zeitdauer (Unterschreiten des ersten Spannungsschwellwertes bis zum Unterschreiten des zweiten Spannungsschwellwerts) mit dem kritischen Zeitwert. Liegt die ermittelte Zeitdauer oberhalb des kritischen Zeitwertes, so liegt ein ordnungsgemäßer Funktionszustand des Energiespeichers 6 vor, d.h. die Ausgabe der Schaltsignale für den ersten und zweiten Schritt wird durch die gepufferte Energie des Energiespeichers 6 gewährleistet. Liegt die ermittelte Zeitdauer jedoch unterhalb des kritischen Zeitwertes, so ist die Ausgabe der Schaltsignale für den ersten und zweiten Schritt durch die gepufferte Energie des Energiespeichers 6 gefährdet. Ein derartiger Zustand kann durch eine Alterung des Kondensators des Energiespeichers 6 entstehen.

Sofern die Auswertung der Steuereinheit ergibt, dass die Zeitdauer vom Unterschreiten des ersten Spannungsschwellwertes bis zum Unterschreiten des zweiten Spannungsschwellwerts unterhalb des kritischen Zeitwertes liegt, so gibt das Schaltgerät 1 ein Warnsignal aus, so dass ein Anwender diesen Zustand detektieren kann.

Der kritische Zeitwert ist kein fixer Zeitwert, sondern wird in Abhängigkeit der über die erste Messvorrichtung 8 ermittelte Versorgungsspannung vor dem Spannungsabfall sowie des vorliegenden Betriebszustandes des nachgeschalteten Elektromotors 5 (eingeschaltet / ausgeschaltet) bestimmt. Die Bestimmung des kritischen Zeitwertes erfolgt mittels einer in der Steuereinheit hinterlegten tabellarischen Auflistung. Es ist jedoch ebenso denkbar, dass die Bestimmung des kritischen Zeitwertes mittels eines in der Steuereinheit 2 hinterlegten Algorithmus erfolgt, welcher obige Werte berücksichtigt.

Bei einer tabellarischen Auflistung sind insbesondere folgende Werte hinterlegt:
- Spannungswert auf der Primärseite des Netzteils 19 vor dem Spannungsausfall (d.h. bei einer ordnungsgemäßen Energieversorgung durch die Versorgungsquelle 5); z.B.: Szenario A: größer 24 Volt / Szenario B: kleiner 24 Volt und größer 20 Volt / Szenario C: kleiner 20 Volt,
- kritischer Zeitwert bei einem ausgeschalteten Elektromotor 5; z.B.: Szenario A: 150 ms / Szenario B: 120 ms / Szenario C: 100 ms,
- kritischer Zeitwert bei einem eingeschalteten Elektromotor 5; z.B.: Szenario A: 100 ms / Szenario B: 80 ms / Szenario C: 60 ms.

In Abhängigkeit des ermittelten vorliegenden Spannungswertes auf der Primärseite des Netzteils 19 vor einem Spannungsausfall und des vorliegenden Betriebszustandes des Elektromotors bei dem unterschreiten des ersten Spannungswertes wird durch die Steuereinheit 2 der kritische Zeitwert bestimmt.

Liegt beispielsweise ein Spannungswert auf der Primärseite des Netzteils 19 vor dem Spannungsausfall von 28 Volt vor (Szenario A) und der Motor ist eingeschaltet, so liegt ein kritischer Zeitwert von 100 ms vor.

Falls der kritische Zeitwert unterschritten wird, ist die Kapazität des Pufferkondensators 6, z.B. durch die Alterung der Kondensators 6, so stark beeinträchtigt, dass eine reguläre Abschaltung (erster und zweiter Schritt) bei Nothalt nicht mehr zuverlässig durchgeführt werden kann. Ein entsprechendes Warnsignal wird seitens der Steuereinheit 2 ausgegeben. Mittels des Warnsignals wird ein Gerätefehler generiert, welcher insbesondere ein Schließen der Schalter 11,12,13,21,22,23 unterbindet.

## Patentansprüche

1. Schaltgerät (1) mit einer Steuereinheit (2), einem Versorgungsanschluss (7), einem Netzteil (19) und einer ersten Strombahn (15), welche einen ersten elektromechanischen Schalter (11) und eine in Reihe zum ersten Schalter (11) geschaltete Parallelschaltung eines zweiten elektromechanischen Schalters (13) mit einem Halbleiterschalter (12) umfasst, wobei die Steuereinheit (2) ein Schaltsignal für den ersten Schalter (11), den zweiten Schalter (13) und den Halbleiterschalter (12) ausgeben kann, wobei der Versorgungsanschluss (7) mit dem Netzteil (19) verbunden ist und die Steuereinheit (2) über das Netzteil (19) die Energie für die Schaltsignale bezieht,
**dadurch gekennzeichnet, dass**
das Schaltgerät (1) einen Energiespeicher (6) und zwei mit der Steuereinheit (2) verbundene Messvorrichtungen (8,80) umfasst, wobei der Energiespeicher (6) zwischen dem Versorgungsanschluss (7) und dem Netzteil (19) zwischengeschaltet ist, so dass mittels des Energiespeichers (6) eine über den Versorgungsanschluss (7) erfolgende Energieversorgung des Schaltgerätes (1) geräteintern gepuffert wird, wobei die Steuereinheit (2) mittels der ersten Messvorrichtung (8) ein Unterschreiten der an der Primärseite des Netzteils (19) anliegenden Versorgungsspannung unter einen ersten Spannungsschwellwert ermitteln kann, wobei die Steuereinheit (2) mittels der zweiten Messvorrichtung (80) ein Unterschreiten der an der Sekundärseite des Netzteils (19) anliegenden Versorgungsspannung unter einen zweiten Spannungsschwellwert ermitteln kann, wobei die Steuereinheit (2) derart ausgebildet ist, dass sie die Zeitdauer vom Unterschreiten des ersten Spannungsschwellwertes bis zum Unterschreiten des zweiten Spannungsschwellwerts auswertet, und ein Signal ausgibt, wenn die Zeit vom Unterschreiten des ersten Spannungsschwellwertes bis zum Unterschreiten des zweiten Spannungsschwellwerts einen kritischen Zeitwert unterschreitet.

2. Schaltgerät nach Anspruch 1, wobei die Steuereinheit (2) derart ausgebildet ist, dass sie bei einem Ermitteln eines Unterschreitens des ersten Spannungsschwellwerts an der Primärseite des Netzteils (19) mittels der Energie des Energiespeichers (6):
- in einem ersten Schritt den Halbleiterschalter (12) elektrisch leitend schaltet und anschließend den zweiten Schalter (13) öffnet,
- nach dem ersten Schritt in einem zweiten Schritt den Halbleiterschalter (12) elektrisch nichtleitend schaltet und anschließend den ersten Schalter (11) öffnet.

3. Schaltgerät nach Anspruch 1, wobei die Steuereinheit (2) derart ausgebildet ist, dass sie mittels der ersten Messvorrichtung (8) die Spannung auf der Primärseite des Netzteils (19) ermittelt und in Abhängigkeit der ermittelten Spannung den kritischen Zeitwert bestimmt.

4. Schaltgerät nach einem der vorhergehenden Ansprüche, wobei der Energiespeicher (6) über den Versorgungsanschluss (7) aufgeladen werden kann.

5. Schaltgerät nach einem der vorhergehenden Ansprüche, wobei der Energiespeicher (6) derart ausgebildet ist, dass er die Ausgabe der erforderlichen Schaltsignale für die ersten und zweiten Schritte sicherstellt.

6. Schaltgerät nach einem der vorhergehenden Ansprüche, wobei das Schaltgerät eine zweite Strombahn (25) umfasst, welche einen ersten elektromechanischen Schalter (21) und eine in Reihe zum ersten Schalter (21) geschaltete Parallelschaltung eines zweiten elektromechanischen Schalters (23) mit einem Halbleiterschalter (22) umfasst, wobei die Steuereinheit (2) ein Schaltsignal für den ersten Schalter (21), den zweiten Schalter (23) und den Halbleiterschalter (22) der zweiten Strombahn (25) ausgeben kann, wobei die Steuereinheit (2) derart ausgebildet ist, dass sie, sofern die mittels der Messvorrichtung überwachte Energieversorgung in einen kritischen Bereich fällt, mittels der Energie des Energiespeichers (6) :
- in einem ersten Schritt den Halbleiterschalter (22) der zweiten Strombahn (25) elektrisch leitend schaltet und anschließend den zweiten Schalter (23) der zweiten Strombahn (25) öffnet,
- nach dem ersten Schritt in einem zweiten Schritt den Halbleiterschalter (22) der zweiten Strombahn (25) elektrisch nichtleitend schaltet und anschließend den ersten Schalter (21) der zweiten Strombahn (25) öffnet.

7. Schaltgerät nach einem der vorhergehenden Ansprüche, wobei die Steuereinheit (2) derart ausgebildet ist, dass sie im zweiten Schritt den Halbleiterschalter (12,22) im Stromnulldurchgang, der über ihn erfolgenden Energiezufuhr, in den elektrisch nichtleitenden Zustand schaltet.

8. System, zum sicheren Betreiben eines Elektromotors (5), mit einem Schaltgerät (1) gemäß einem der Ansprüche 1 bis 7, einer Versorgungsquelle (50) und einer Schaltvorrichtung (40), wobei die Schaltvorrichtung (40) in den Versorgungsstrang der Versorgungsquelle (50) zum Versorgungsanschluss (7) des Schaltgeräts (1) derart zwischengeschaltet ist, dass durch eine Betätigung der Schaltvorrichtung (40) eine durch die Versorgungsquelle (50) erfolgende Energieversorgung zum Schaltgerät (1) unterbrochen wird.

9. Verfahren eines Schaltgeräts (1), welches eine Steuereinheit (2), einen Versorgungsanschluss (7), ein Netzteil (19) und eine erste Strombahn (15) umfasst, wobei die erste Strombahn (15) einen ersten elektromechanischen Schalter (11) und eine in Reihe zum ersten Schalter (11) geschaltete Parallelschaltung eines zweiten elektromechanischen Schalters (13) mit einem Halbleiterschalter (12) umfasst, wobei die Steuereinheit (2) ein Schaltsignal für den ersten Schalter (11), den zweiten Schalter (13) und den Halbleiterschalter (12) ausgeben kann, wobei der Versorgungsanschluss (7) mit dem Netzteil (19) verbunden ist und die Steuereinheit (2) über das Netzteil (19) die Energie für die Schaltsignale bezieht, **dadurch gekennzeichnet, dass**
das Schaltgerät (1) einen Energiespeicher (6) und zwei mit der Steuereinheit (2) verbundene Messvorrichtungen (8,80) umfasst, wobei der Energiespeicher (6) zwischen dem Versorgungsanschluss (7) und dem Netzteil (19) zwischengeschaltet ist, so dass mittels des Energiespeichers (6) die über den Versorgungsanschluss (7) erfolgende Energieversorgung des Schaltgerätes (2) geräteintern gepuffert wird, wobei die Steuereinheit (2) mittels der ersten Messvorrichtung (8) ein Unterschreiten der an der Primärseite des Netzteils (19) anliegenden Versorgungsspannung unter einen ersten Spannungsschwellwert ermittelt und mittels der zweiten Messvorrichtung (80) ein Unterschreiten der an der Sekundärseite des Netzteils (19) anliegenden Versorgungsspannung unter einen zweiten Spannungsschwellwert ermittelt, wobei die Steuereinheit (2) die Zeitdauer vom Unterschreiten des ersten Spannungsschwellwertes bis zum Unterschreiten des zweiten Spannungsschwellwerts auswertet, und die Steuereinheit (2) ein Signal ausgibt, wenn die Zeit vom Unterschreiten des ersten Spannungsschwellwertes bis zum Unterschreiten des zweiten Spannungsschwellwerts einen kritischen Zeitwert unterschreitet.

10. Verfahren des Schaltgeräts (1) nach Anspruch 9, wobei die Steuereinheit (2) nach dem Ermitteln des Unterschreitens des ersten Spannungsschwellwerts an der Primärseite des Netzteils (19) automatisch mittels der Energie des Energiespeichers (6) :
- in einem ersten Schritt den Halbleiterschalter (12) elektrisch leitend schaltet und anschließend den zweite Schalter (13) öffnet,
- nach dem ersten Schritt in einem zweiten Schritt den Halbleiterschalter (12) elektrisch nichtleitend schaltet und anschließend den ersten Schalter (11) öffnet.

11. Verfahren des Schaltgeräts (1) nach Anspruch 9, wobei die Steuereinheit (2) mittels der ersten Messvorrichtung (8) die Spannung auf der Primärseite des Netzteils (19) ermittelt und in Abhängigkeit der ermittelten Spannung den kritischen Zeitwert bestimmt.

12. Verfahren des Schaltgeräts (1) nach einem der Ansprüche 9 bis 11, wobei die Steuereinheit (2) im zweiten Schritt den Halbleiterschalter (12,22) im Stromnulldurchgang, der über ihn erfolgenden Energiezufuhr, in den elektrisch nichtleitenden Zustand schaltet.

## Claims

1. Switching device (1) with a control unit (2), a supply connection (7), a power supply unit (19) and a first current path (15), which incorporates a first electro-mechanical switch (11) and, connected in series with the first switch (11), a circuit incorporating a second electro-mechanical switch (13) in parallel with a semiconductor switch (12), wherein the control unit (2) can output a switching signal for the first switch (11), for the second switch (13) and for the semiconductor switch (12), wherein the supply connection (7) is linked to the power supply unit (19) and the control unit (2) draws the energy for the switching signals through the power supply unit (19),
**characterised in that**
the switching device (1) incorporates an energy store (6) and two measurement devices (8,80) linked to the control unit (2), wherein the energy store (6) is connected in between the supply connection (7) and the power supply unit (19), so that an energy supply for the switching device (1) effected through the supply connection (7) is buffered internally within the device by means of the energy store (6), wherein the control unit (2) can determine by means of the first measurement device (8) any drop in the supply voltage, present at the primary side of the power supply unit (19), below a first voltage threshold value, wherein the control unit (2) can determine by means of the second measurement device (80) any drop in the supply voltage present at the secondary side of the power supply unit (19) below a second voltage threshold value, wherein the control unit (2) is designed in such a way that it evaluates the duration of the time from when the voltage drops below the first voltage threshold value up until when the voltage drops below the second voltage threshold value, and outputs a signal if the time from when the voltage drops below the first voltage threshold value up until when the voltage drops below the second voltage threshold value falls below a critical time value.

2. Switching device according to claim 1, wherein the control unit (2) is designed in such a way that, if it determines that the voltage on the primary side of the power supply unit (19) has dropped below the first voltage threshold value, it uses the energy in the energy store (6) and:
- in a first step switches the semiconductor switch (12) to be electrically conducting and then opens the second switch (13),
- after the first step, in a second step it switches the semiconductor switch (12) to be electrically non-conducting, and then opens the first switch (11).

3. Switching device according to claim 1, wherein the control unit (2) is designed in such a way that it determines by means of the first measurement device (8) the voltage on the primary side of the power supply unit (19) and determines the critical time value as a function of the voltage determined.

4. Switching device according to one of the preceding claims, wherein the energy store (6) can be charged up through the supply connection (7).

5. Switching device according to one of the preceding claims, wherein the energy store (6) is designed in such a way that it ensures the output of the switching signals required for the first and second steps.

6. Switching device according to one of the preceding claims, wherein the switching device incorporates a second current path (25), which incorporates a first electro-mechanical switch (21) and, connected in series with the first switch (21), a circuit incorporating a second electro-mechanical switch (23) in parallel with a semiconductor switch (22), wherein the control unit (2) can output a switching signal for the first switch (21), for the second switch (23) and for the semiconductor switch (22) in the second current path (25), wherein the control unit (2) is designed in such a way that, if the energy supply which is monitored by means of the measurement device drops into a critical range, it uses the energy in the energy store (6) and:
- in a first step switches the semiconductor switch (22) in the second current path (25) to be electrically conducting and then opens the second switch (23) in the second current path (25),
- after the first step, in a second step it switches the semiconductor switch (22) in the second current path (25) to be electrically non-conducting, and then opens the first switch (21) in the second current path (25).

7. Switching device according to one of the preceding claims, wherein the control unit (2) is designed in such a way that in the second step it switches the semiconductor switch (12,22) into the electrically non-conducting state as the current for the energy it feeds passes through zero.

8. System for the safe operation of an electric motor (5), with a switching device (1) according to one of claims 1 to 7, a supply source (50) and a switching mechanism (40), wherein the switching mechanism (40) is connected into the supply line from the supply source (50) to the supply connection (7) of the switching device (1) in such a way that by actuating the switching mechanism (40) a supply of energy effected from the supply source (50) to the switching device (1) is interrupted.

9. Method for a switching device (1), which incorporates a control unit (2), a supply connection (7), a power supply unit (19) and a first current path (15), wherein the first current path (15) incorporates a first electro-mechanical switch (11) and, connected in series with the first switch (11), a circuit incorporating a second electro-mechanical switch (13) in parallel with a semiconductor switch (12), wherein the control unit (2) can output a switching signal for the first switch (11), for the second switch (13) and for the semiconductor switch (12), wherein the supply connection (7) is linked to the power supply unit (19) and the control unit (2) draws the energy for the switching signals through the power supply unit (19),
**characterised in that**
the switching device (1) incorporates an energy store (6) and two measurement devices (8,80) linked to the control unit (2), wherein the energy store (6) is connected in between the supply connection (7) and the power supply unit (19), so that an energy supply for the switching device (2) effected through the supply connection (7) is buffered internally within the device by means of the energy store (6), wherein the control unit (2) determines by means of the first measurement device (8) any drop in the supply voltage, present at the primary side of the power supply unit (19), below a first voltage threshold value and by means of the second measurement device (80) determines any drop in the supply voltage, present at the secondary side of the power supply unit (19), below a second voltage threshold value, wherein the control unit (2) evaluates the duration of the time from when the voltage drops below the first voltage threshold value up until when the voltage drops below the second voltage threshold value, and the control unit (2) outputs a signal if the time from when the voltage drops below the first voltage threshold value up until when the voltage drops below the second voltage threshold value falls below a critical time value.

10. Method for the switching device (1) according to claim 9 wherein, after determining that the voltage on the primary side of the power supply unit (19) has dropped below the first voltage threshold value, the control unit (2), using the energy in the energy store (6), automatically:
- in a first step switches the semiconductor switch (12) to be electrically conducting and then opens the second switch (13),
- after the first step, in a second step it switches the semiconductor switch (12) to be electrically non-conducting, and then opens the first switch (11).

11. Method for the switching device (1) according to claim 9, wherein the control unit (2) determines by means of the first measurement device (8) the voltage on the primary side of the power supply unit (19) and determines the critical time value as a function of the voltage determined.

12. Method for the switching device (1) according to one of claims 9 to 11 wherein, in the second step, the control unit (2) switches the semiconductor switch (12,22) into the electrically non-conducting state as the current for the energy it feeds passes through zero.

## Revendications

1. Appareil (1) de coupure, comprenant une unité (2) de commande, une borne (7) d'alimentation, une partie (19) de réseau et une première voie (15) de courant, qui comprend un premier interrupteur (11) électromécanique et un circuit en parallèle, monté en série avec le premier interrupteur (11), d'un deuxième interrupteur (13) électromécanique et d'un interrupteur (12) à semi-conducteur, dans lequel l'unité (2) de commande peut émettre un signal de coupure pour le premier interrupteur (11), le deuxième interrupteur (13) et l'interrupteur (12) à semi-conducteur, la borne (7) d'alimentation étant reliée à la partie (19) de réseau et l'unité (2) de commande fournissant, par l'intermédiaire de la partie (19) de réseau, l'énergie pour les signaux de coupure,
**caractérisé en ce que**
l'appareil (1) de coupure comprend un accumulateur (6) d'énergie et deux dispositifs (8,80) de mesure reliés à l'unité (2) de commande, l'accumulateur (6) d'énergie étant monté entre la borne (7) d'alimentation et la partie (19) de réseau, de manière à mettre en tampon, d'une façon interne à l'appareil, au moyen de l'accumulateur (6) d'énergie, une alimentation en énergie de l'appareil (1) de coupure s'effectuant par la borne (7) d'alimentation, l'unité (2) de commande pouvant, au moyen du premier dispositif (8) de mesure, déterminer que la tension d'alimentation, s'appliquant au côté primaire de la partie (19) du réseau, devient inférieure à une première valeur de seuil de tension, l'unité (2) de commande pouvant, au moyen du deuxième dispositif (80) de mesure, déterminer que la tension d'alimentation s'appliquant au côté secondaire de la partie (19) de réseau devient inférieure à une deuxième valeur de seuil de tension, l'unité (2) de commande étant constituée de manière à exploiter la durée allant de l'instant où la tension devient inférieure à la première valeur de seuil de tension à l'instant où la tension devient inférieure à la deuxième valeur de seuil de tension et émettant un signal si la durée, allant de l'instant où la tension devient inférieure à la première valeur de seuil de tension, à l'instant où la tension devient inférieure à la deuxième valeur de seuil de tension, devient inférieure à une valeur de temps critique.

2. Appareil de coupure suivant la revendication 1, dans lequel l'unité (2) de commande est constituée de manière à ce que, lors d'une détermination que la tension au côté primaire de la partie (19) de réseau devient inférieure à la première valeur de seuil de tension, elle, au moyen de l'énergie de l'accumulateur (6) d'énergie :
- dans un premier stade, rend conducteur électriquement l'interrupteur (12) à semi-conducteur et ouvre ensuite le deuxième interrupteur (13),
- après le premier stade, dans un deuxième stade, rend non conducteur électriquement l'interrupteur (12) à semi-conducteur et ensuite ouvre le premier interrupteur (11).

3. Appareil de coupure suivant la revendication 1, dans lequel l'unité (2) de commande est constituée de manière à déterminer, au moyen du premier dispositif (8) de mesure, la tension du côté primaire de la partie (19) de réseau et, en fonction de la tension déterminée, à déterminer la valeur de temps critique.

4. Appareil de coupure suivant l'une des revendications précédentes, dans lequel l'accumulateur (6) d'énergie peut être chargé par l'intermédiaire de la borne (7) d'alimentation.

5. Appareil de coupure suivant l'une des revendications précédentes, dans lequel l'accumulateur (6) d'énergie est constitué de manière à assurer l'émission des signaux de coupure nécessaires pour les premier et deuxième stades.

6. Appareil de coupure suivant l'une des revendications précédentes, dans lequel l'appareil de coupure a une deuxième voie (25) de courant, qui comprend un premier interrupteur (21) électromécanique et un circuit en parallèle, monté en série au premier interrupteur (21), d'un deuxième interrupteur (23) électromécanique et d'un interrupteur (22) à semi-conducteur, l'unité (2) de commande pouvant émettre un signal de coupure pour le premier interrupteur(21), le deuxième interrupteur (23) et l'interrupteur (22) à semi-conducteur, de la deuxième voie (25) de courant, l'unité (2) de commande étant constituée de manière à, pour autant que l'alimentation en énergie contrôlée au moyen du dispositif de mesure, vient dans une plage critique, au moyen de l'accumulateur (6) d'énergie :
- dans un premier stade, rendre conducteur électriquement l'interrupteur (22) à semi-conducteur de la deuxième voie (25) de courant et, ensuite, ouvrir le deuxième interrupteur (23) de la deuxième voie (25) de courant,
- après le premier stade, dans un deuxième stade, rendre non conducteur électriquement l'interrupteur (22) à semi-conducteur de la deuxième voie (25) de courant et, ensuite, ouvrir le premier interrupteur (21) de la deuxième voie (25) de courant.

7. Appareil de coupure suivant l'une des revendications précédentes, dans lequel l'unité (2) de commande est constituée de manière à mettre, à l'état non conducteur électriquement, l'interrupteur (12, 22) à semi-conducteur au passage par zéro du courant, l'apport d'énergie s'effectuant par lui.

8. Système pour le fonctionnement sécurisé d'un moteur (5) électrique, comprenant un appareil (1) de coupure suivant l'une des revendications 1 à 7, une source (50) d'alimentation et un dispositif (40) de coupure, le dispositif (40) de coupure étant interposé dans la chaîne d'alimentation allant de la source (50) d'alimentation à la borne (7) d'alimentation de l'appareil (1) de coupure, de manière à interrompre, par un actionnement du dispositif (40) de coupure, une alimentation en énergie de l'appareil (1) de coupure s'effectuant par la source (50) d'alimentation.

9. Procédé d'un appareil (1) de coupure, qui comprend une unité (2) de commande, une borne (7) d'alimentation, une partie (19) de réseau et une première voie (15) de courant, qui comprend un premier interrupteur (11) électromécanique et un circuit en parallèle, monté en série avec le premier interrupteur (11), d'un deuxième interrupteur (13) électromécanique et d'un interrupteur (12) à semi-conducteur , dans lequel l'unité (2) de commande peut émettre un signal de coupure pour le premier interrupteur (11), le deuxième interrupteur (13) et l'interrupteur (12) à semi-conducteur, la borne (7) d'alimentation étant reliée à la partie (19) de réseau et l'unité (2) de commande fournissant, par l'intermédiaire de la partie (19) de réseau, l'énergie pour les signaux de coupure,
**caractérisé en ce que**
l'appareil (1) de coupure comprend un accumulateur (6) d'énergie et deux dispositifs (8,80) de mesure reliés à l'unité (2) de commande, l'accumulateur (6) d'énergie étant monté entre la borne (7) d'alimentation et la partie (19) de réseau, de manière à mettre en tampon, d'une façon interne à l'appareil, au moyen de l'accumulateur (6) d'énergie, une alimentation en énergie de l'appareil (1) de coupure s'effectuant par la borne (7) d'alimentation, l'unité (2) de commande pouvant, au moyen du premier dispositif (8) de mesure, déterminer que la tension d'alimentation, s'appliquant au côté primaire de la partie (19) du réseau, devient inférieure à une première valeur de seuil de tension, l'unité (2) de commande pouvant, au moyen du deuxième dispositif (80) de mesure, déterminer que la tension d'alimentation s'appliquant au côté secondaire de la partie (19) de réseau devient inférieure à une deuxième valeur de seuil de tension, l'unité (2) de commande exploitant la durée allant de l'instant où la tension devient inférieure à la première valeur de seuil de tension à l'instant où la tension devient inférieure à la deuxième valeur de seuil de tension et émettant un signal si la durée allant, de l'instant où la tension devient inférieure à la première valeur de seuil de tension à l'instant où la tension devient inférieure à la deuxième valeur de seuil de tension devient inférieure à une valeur de temps critique.

10. Procédé de l'appareil (1) de coupure suivant la revendication (9), dans lequel l'unité (2) de commande, après la détermination de l'instant où la tension du côté primaire de la partie (19) de réseau devient inférieure à la première valeur de seuil de tension, automatiquement, au moyen de l'énergie de l'accumulateur (6) d'énergie :
- dans un premier stade, rend conducteur électriquement l'interrupteur à semi-conducteur et ouvre ensuite le deuxième interrupteur (13),
- après le premier stade, dans un deuxième stade, rend non conducteur électriquement l'interrupteur (12) à semi-conducteur et ensuite ouvre le premier interrupteur (11).

11. Procédé de l'appareil (1) de coupure suivant la revendication (9), dans lequel l'unité de commande détermine, au moyen du premier dispositif (8) de mesure, la tension du côté primaire de la partie (19) de réseau et détermine la valeur de temps critique en fonction de la tension déterminée.

12. Procédé de l'appareil (1) de coupure suivant l'une des revendications 9 à 11, dans lequel l'unité (2) de commande met dans l'état non conducteur électriquement, dans le deuxième stade, l'interrupteur (12, 22) à semi-conducteur, au passage par le courant zéro, l'apport d'énergie s'effectuant par lui.
